# EUROPÄISCHE PATENTSCHRIFT

(11) **EP 1 119 020 B1**
(45) Veröffentlichungstag und Bekanntmachung des Hinweises auf die Patenterteilung: **17.01.2007**
(21) Anmeldenummer: 01200068.3
(22) Anmeldetag: 10.01.2001
(51) Int. Cl.: H01J 61/44, H01J 61/46, C09K 11/02

(54) **Warmton-Leuchtstofflampe**
Warm colour fluorescent lamp
Lampe fluorescente de couleur chaude

(30) Priorität: 18.01.2000 DE 10001763
(43) Veröffentlichungstag der Anmeldung: 25.07.2001
(73) Patentinhaber: Philips Intellectual Property & Standards GmbH, 20099 Hamburg (DE); Koninklijke Philips Electronics N.V., 5621 BA Eindhoven (NL)
(72) Erfinder: Jüstel, Thomas, Dr., Postfach 500442, 52088 Aachen (DE); Nikol, Hans, Dr., Postfach 500442, 52088 Aachen (DE); Jalink, Kim, Dr., Postfach 500442, 52088 Aachen (DE); Busselt, Wolffang, Postfach 500442, 52088 Aachen (DE)
(74) Vertreter: Volmer, Georg

(56) Entgegenhaltungen:
- EP-A- 1 077 471
- US-A- 3 824 423
- DATABASE WPI Section EI, Week 199110 Derwent Publications Ltd., London, GB; Class S06, AN 1991-070801 XP002202533 & JP 03 020995 A (MITSUBISHI DENKI KK), 29. Januar 1991 (1991-01-29)

## Beschreibung

Die Erfindung betrifft eine Gasentladungslampe, insbesondere eine Leuchtstofflampe, ausgerüstet mit einem gasdicht verschlossenen, transparenten Lampenkolben, der ein Füllgas, das Quecksilber enthält und einen Leuchtstoffüberzug umfasst, und mit zwei Elektroden.

Die Lichterzeugung in Gasentladungslampen beruht darauf, dass Ladungsträger, insbesondere Elektronen, aber auch Ionen, durch ein elektrisches Feld zwischen den Elektroden der Lampe so stark beschleunigt werden, dass sie im Füllgas der Lampe durch Zusammenstöße mit den Gasatomen oder Molekülen diese anregen oder ionisieren. Bei der Rückkehr der Atome in ihren Grundzustand sowie bei der Rekombination von Elektronen und Ionen wird ein mehr oder weniger großer Teil der potentiellen Energie in Strahlung umgewandelt.

US-3,824,423 offenbart eine Niederdruckgasentladungslampe gefüllt mit einer organischen fluoreszierenden Verbindung z.B. Perylen.

Leuchtstofflampen sind Niederdruckgasentladungslampen, deren Gasfüllung Quecksilber enthält und die einen Leuchtstoffüberzug auf dem Lampengefäß aufweisen. Das Spektrum der von Quecksilber ausgehenden Strahlung enthält neben einem Anteil an sichtbarem Licht auch einen besonders hohen Anteil an für das menschliche Auge unsichtbare UV-Strahlung. Diese UV-Strahlung fällt auf den Leuchtstoff bzw. das Leuchtstoffgemisch an der Innenseite des Lampenkolbens. Die Leuchtstoffe absorbieren die Strahlung und emittieren dafür eine längerwellige Strahlung, d.h. sichtbares Licht. Die chemische Zusammensetzung des Leuchtstoffüberzuges bestimmt das Spektrum des erzeugten sichtbaren Lichts und damit dessen Farbtemperatur. Durch geeignete Wahl der Leuchtstoffe kann man dem Licht der Leuchtstofflampe jede gewünschte Farbe geben. Die wahrgenommene Farbe hängt vom Intensitätsverhältnis im Wellenlängenspektrum der erzeugten Strahlung ab; die Helligkeit wird durch die Gesamtintensität bestimmt.

Um weißes Licht zu erzeugen, werden spezielle Leuchtstoffe oder Leuchtstoffmischungen eingesetzt, die besonders intensiv in den Spektralbereichen Rot, Grün und Blau strahlen; im Auge entsteht dadurch der Eindruck von "Weiß". Beispielsweise enthalten die konventionellen Dreibandenlampen die Drei-Banden-Leuchtstoffe (triphosphors) Ba MgAl₁₀O₁₇:Eu (BAM) mit einer Emissionsbande bei 450 nm, CeMgAl₁₁O₁₉:Tb (CAT)mit einer Emissionsbande bei 545 nm und Y₂O₃:Eu (YOX) mit einer Emissionsbande bei 612 nm. Die emittierten Wellenlängen der drei Drei-Banden-Leuchtstoffe liegen jeweils in der Nähe der Eckpunkte des CIE-Normfarbdiagramms (CIE standard chromaticity diagram) und addieren sich zu einem Emissionsspektrum, dessen Farbpunkt dem eines schwarzen Körpers sehr nahe kommt. Während der Farbwiedergabe-Index CRI (color rendering index) eines schwarzen Körpers bei jeder Temperatur auf 100 normiert ist, liegt der Wert für Dreibandenlampen bei 80 bis 95.

Leuchtstofflampen werden in drei Farbtemperaturbereichen hergestellt und zwar in solche mit tageslichtweißer Lichtfarbe mit einer Farbtemperatur von 5000 bis 6000 K, mit neutralweißer Lichtfarbe mit einer Farbtemperatur von 4000 bis 4300 K und mit warmweißer Lichtfarbe mit einer Farbtemperatur von 2700 bis 3200 K.

Es besteht jedoch auch Bedarf nach Leuchtstofflampen, die eine noch wärmerer Lichtfarbe mit einer Farbtemperatur unter 2700 K aufweisen, so wie es der Verbraucher von Glühlampen her gewöhnt ist und die als besonders angenehm empfunden wird. Eine derartige Farbtemperatur kann nicht mit einem Drei-Banden-Leuchtstoff-Gemisch erreicht werden. Um niedrige Farbtemperaturen zu erreichen, ist es notwendig, einen Teil der sichtbaren blauen Hg-Strahlung bei 400 bis 450 nm aus dem Wellenlängenspektrum zu entfernen. Es ist bekannt, dafür einen mit Cer aktivierten Aluminat-Leuchtstoff, einen Magnesiumgermanat-Leuchtstoff oder Yttrium-Aluminium-Granat (YAG) zu verwenden (Kirk-Othmer, Encyclopedia of Chemical Technology, 4. Auflage, New York, Interscience, Vol. 15. S. 580). Ein grundsätzlicher Nachteil dieser Leuchtstoffe ist ihr geringes Absorptionsvermögen.

Es ist daher die Aufgabe der vorliegenden Erfindung, eine Gasentladungslampe, insbesondere eine Leuchtstofflampe, ausgerüstet mit einem gasdicht verschlossenen, transparenten Lampenkolben, der ein Füllgas, das Quecksilber enthält und einen Leuchtstoffüberzug umfasst, und mit zwei Elektroden, zur Verfügung zu stellen, die eine warme Lichtfarbe und einen hohen Farbwiedergabe-Index hat und kostengünstig herzustellen ist.

Erfindungsgemäß wird die Aufgabe gelöst, durch eine Gasentladungslampe, ausgerüstet mit einem gasdicht verschlossenen, transparenten Lampenkolben, der ein Füllgas, das Quecksilber enthält, und einen ersten Leuchtstoffüberzug umfasst, und mit zwei Elektroden, wobei der erste Leuchtstoffüberzug ein Perylen-Pigment enthält. Das Perylen-Pigment in der Leuchtstoffbeschichtung wirkt als Farbkonverter. Es absorbiert die Quecksilberstrahlung im blauen und nahen UV-Bereich 436 und 405 nm und emittiert Strahlung im längerwelligen Bereich von Grün über Gelb bis Rot. Die Perylen-Pigmente vereinen eine sehr gute Absorption im blauen und nahen UV-Bereich mit einem hohen Absorptionskoeffizienten ε = 100000 1/cm·mol und eine Emissionsquantenausbeute > 90%. Im Gegensatz zu anderen organischen Farbpigmenten werden sie durch die UV-Strahlung nicht zersetzt.

Im Rahmen der vorliegenden Erfindung ist es bevorzugt, dass der erste Leuchtstoffüberzug zusätzlich ein Drei-Banden-Leuchtstoffgemisch enthält.

Besonders bevorzugt ist es, dass die Gasentladungslampe einen zweiten Leuchtstoffüberzug, der ein Drei-Banden-Leuchtstoffgemisch enthält, umfasst.

Insbesondere ist es bevorzugt, dass der zweite Leuchtstoffüberzug Ba MgAl₁₀O₁₇:Eu, CeM-gAl₁₁O₁₉:Tb und Y₂O₃:Eu enthält. Mit dieser Gasentladungslampe kann eine Farbtemperatur unter 2700 K bei einem Farbwiedergabe-Index von über 90 erreicht werden.

Es kann auch bevorzugt sein, dass der erste Leuchtstoffüberzug organisches Polymere enthält. Perylen-Pigmente lassen sich leicht in organischen Polymeren dispergieren und bilden dann einen Überzug, der auch Glasbruch hemmt.

Es ist besonders bevorzugt, dass der erste Leuchtstoffüberzug N,N -Bis(2,6-diisopropylphenyl)perylen-3,4,:9,10-tetracarbonsäurediimid enthält. In einer Schichtdicke von 1 mm absorbiert dieses Perylen-Pigment 99 % der Hg-Emission bei 436 nm und 50 % der Hg-Emission bei 405 nm.

Wenn der erste Leuchtstoffüberzug zwei Perylen-Pigmente enthält, kann damit eine zweifache Farbkonvertierung erreicht werden.

Im Rahmen der vorliegenden Erfindung ist es bevorzugt, dass die Gasentladungslampe einen Leuchtstoffüberzug ein Drei-Banden-Leuchtstoffgemisch enthält.

Nachfolgend wird die Erfindung anhand einer Figur weiter erläutert.

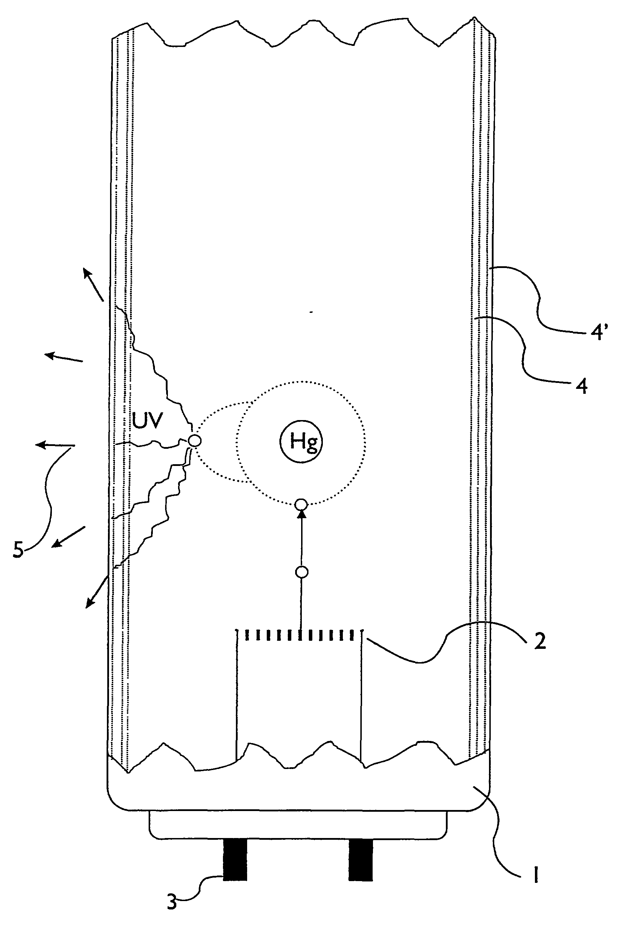

Fig. 1 zeigt die Lichterzeugung in einer Leuchtstofflampe mit zwei Leuchtstoffüberzügen.

Fig. 1 zeigt beispielhaft eine Niederdruckgasentladungslampe mit Quecksilberfüllung, d.h. eine Leuchtstofflampe. Eine solche Gasentladungslampe besteht aus einem rohrförmigen Lampenkolben 1 in Stab-, Ring oder U-Form. An den Enden des Rohrs befinden sich die Elektroden 2. Als Anschluss dienen Zweistiftsockel 3. Die Außenseite des Glaskolbens ist mit einem ersten Leuchtstoffüberzug 4', der ein Perylen-Pigment enthält, versehen. Die Innenseite des Glasrohrs ist mit einem zweiten Leuchtstoffüberzug 4, der ein Drei-Banden-Leuchtstoffgemisch enthält, versehen. Die chemische Zusammensetzung der ersten und der zweiten Leuchtstoffschicht zusammenbestimmen das Spektrum des Lichts bzw. dessen Farbton. Das Glasrohr enthält neben einer Edelgasfüllung aus Argon eine geringe Menge Quecksilber bzw. Quecksilberdampf, der unter Betriebsbedingungen zum Leuchten angeregt, die Hg-Resonanzlinien bei den Wellenlängen von185,0 nm, 253,7 nm, 406 nm und 436 nm emittiert. Die ausgesendete UV-Strahlung regt die Leuchtstoffe in den Leuchtstoffüberzügen zur Emission von Licht im sichtbaren Bereich 5 an.

Die Lampe umfasst weiterhin Mittel zum Zünden und zum Betreiben, z. B. eine Drosselspule und einen Starter.

Der zweite Leuchtstoffüberzug 4 enthält einen Leuchtstoff oder ein Leuchtstoffgemisch zur Erzeugung von weißem Licht. Geeignete Leuchtstoffe sind Calciumhalophosphat Ca₅(PO₄)₃(F,Cl):Sb³⁺,Mn²⁺ allein oder im Gemisch mit Strontiummagnesiumphosphat (Sr,Mg)₃(PO₄)₂:Sn²⁺, Calciummetasilikat CaSiO₃:Pb²⁺,Mn²⁺ oder Magnesiumarsenat Mg₆As₂O₁₁:Mn⁴⁺, Strontiumhalogenphosphat Sr₅(PO₄)₃(F,Cl):Sb³⁺ oder Calciumwolframat CaWO₄:Pb²⁺ sowie das konventionelle Drei-Banden-Leuchtstoffgemisch aus Ba MgAl₁₀O₁₇:Eu, CeMgAl₁₁O₁₉:Tb und Y₂O₃:Eu allein oder mit weiteren Leuchtstoffen gemischt.

Der erste Leuchtstoffüberzug 4' enthält ein Perylen-Pigment. Die Perylen-Pigmente leiten sich von der 3,4,9,19-Perylentetracarbonsäure ab. Besonders geeignet sind das orange N,N'-Bis (2,6-diisopropylphenyl)perylen-3,4,9,10-tetracarbonsäurediimid und das rote N,N'-Bis (2,6-diisopropylphenyl)- 1,6,7,12,-tetraphenoxyperylen-3,4,9,10-tetracarbonsäurediimid.

Der erste Leuchtstoffüberzug kann auch zwei oder mehr Perylen-Pigmente enthalten. Beispielsweise kann ein Perylen-Pigment mit einer besonders guten Absorption der Hg-Emission bei 436 nm, mit einem Perylen-Pigment mit einem besonders guten Absorption der Hg-Emission bei 406 nm, kombiniert werden.

Eine weitere Reduzierung der Farbtemperatur wird auch erreicht, wenn ein Perylen-Pigment, das eine gute Absorption im Bereich um 400 nm hat und im blaugrünen Spektralbereich emittiert, mit einem weiteren Perylen-Pigment, das die blaugrüne Strahlung absorbiert und im gelben Bereich emittiert, kombiniert wird.

Das Perylen-Pigment löst sich in vielen organischen Polymeren, z. B. in Epoxidharzen, Polycarbonaten und Polymethylmethacrylaten. Polymethylmethacrylat ist besonders geeignet. Die Leuchtstoffbeschichtung kann somit bevorzugt aus einem ersten Leuchtstoffüberzug von 0.2 bis 5 % Perylen-Pigment in Polymethylmethacrylat auf der Außenwand des Behälters und einem innen liegenden weiteren Leuchtstoffüberzug, der die anderen Lampenleuchtstoffe enthält, bestehen. Alternativ kann Leuchtstoffbeschichtung aus einem ersten Leuchtstoffüberzug von 0.2 bis 5 % Perylen-Pigment in Polymethylmethacrylat auf der Innenwand des Behälters und einem innen liegenden weiteren Leuchtstoffüberzug, der die anderen Lampenleuchtstoffe enthält, bestehen.

### Ausführungsbeispiel

0.05 g N,N'-Bis (2,6-diisopropylphenyl)perylen-3,4,9,10-tetracarbonsäurediimid wurden mit 25 g Polymethylmethacrylat in 100 ml Aceton gelöst. 10 ml dieser Lösung wurden auf die äußere Glaswand eines Lampenkolben aufgetragen und zu einer 500 nm dicken Schicht aufgetrocknet. Für die Schicht mit konventionellen Leuchtstoffen wurden Ba MgAl₁₀O₁₇:Eu, CeMgAl₁₁O₁₉:Tb und Y₂O₃:Eu in Butylacetat mit einem Dispergiermittel suspendiert und mittels eines Flow-coating-Verfahrens auf die Innenseite des vorbeschichteten Lampenkolbens aufgetragen und bei 400°C ausgebrannt. Die Lampe hatte eine Farbtemperatur von 1800 K.

## Patentansprüche

1. Gasentladungslampe, ausgerüstet mit einem gasdicht verschlossenen, transparenten Lampenkolben, der ein Füllgas, das Quecksilber enthält, und einen ersten Leuchtstoffübetzug umfasst, und mit zwei Elektroden,
**dadurch gekennzeichnet,**
**dass** der erste Leuchtstoffüberzug ein Perylen-Pigment enthält.

2. Gasentladungslampe gemäß Anspruch 1,
**dadurch gekennzeichnet,**
**dass** der erste Leuchtstoffüberzug zusätzlich ein Drei-Banden-Leuchtstoffgemisch enthält.

3. Gasentladungslampe gemäß Anspruch 1,
**dadurch gekennzeichnet,**
**dass** sie einen zweiten Leuchtstoffüberzug, der ein Drei-Banden-Leuchtstoffgemisch enthält, umfasst.

4. Gasentladungslampe gemäß Anspruch 1,
**dadurch gekennzeichnet,**
**dass** der zweite Leuchtstoffüberzug Ba MgAl₁₀O₁₇:Eu, LaPO₄:Ce,Tb und Y₂O₃:Eu enthält.

5. Gasentladungslampe gemäß Anspruch 1,
**dadurch gekennzeichnet,**
**dass** der erste Leuchtstoffüberzug ein Perylen-Pigment und ein organisches Polymere enthält.

6. Gasentladungslampe gemäß Anspruch 1,
**dadurch gekennzeichnet,**
**dass** der erste Leuchtstoffüberzug N,N'-Bis(2,6-diisopropylphenyl)perylen-3,4,:9,10-tetracarbonsäurediimid enthält.

7. Gasentladungslampe gemäß Anspruch 1,
**dadurch gekennzeichnet,**
**dass** der erste Leuchtstoffüberzug zwei Perylen-Pigmente enthält.

## Claims

1. A gas discharge lamp comprising a gastight, transparent lamp envelope including a filling gas containing mercury and a first phosphor coating, and comprising two electrodes, **characterized in that** the first phosphor coating contains a perylene pigment.

2. A gas discharge lamp as claimed in claim 1, **characterized in that** the first phosphor coating additionally contains a triphosphor mixture.

3. A gas discharge lamp as claimed in claim 1, **characterized in that** the gas discharge lamp comprises a second phosphor coating containing a triphosphor mixture.

4. A gas discharge lamp as claimed in claim 1, **characterized in that** the second phosphor coating comprises BaMgAl₁₀O₁₇:Eu, LaPO₄:CeTb and Y₂O₃:Eu.

5. A gas discharge lamp as claimed in claim 1, **characterized in that** the first phosphor coating contains a perylene pigment and organic polymers.

6. A gas discharge lamp as claimed in claim 1, **characterized in that** the first phosphor coating contains N,N'-bis(2,6-diisopropyl phenyl)perylene-3,4,:9,10 tetracarboxylic acid diimide.

7. A gas discharge lamp as claimed in claim 1, **characterized in that** the first phosphor coating contains two perylene pigments.

## Revendications

1. Lampe à décharge au gaz, équipée d'une ampoule transparente hermétiquement fermée aux gaz qui contient un gaz de remplissage, le mercure, et comprend un revêtement fluorescent, et de deux électrodes,
**caractérisée en ce**
**que** le première revêtement fluorescent contient un pigment de pérylène.

2. Lampe à décharge au gaz selon la revendication 1,
**caractérisée en ce**
**que** le premier revêtement fluorescent contient par ailleurs un mélange tribande de substances fluorescentes.

3. Lampe à décharge au gaz selon la revendication 1,
**caractérisée en ce**
**qu'**elle comprend un deuxième revêtement fluorescent qui contient un mélange tribande de substances fluorescentes.

4. Lampe à décharge au gaz selon la revendication 1,
**caractérisée en ce**
**que** la deuxième revêtement fluorescent contient BaMgAl₁₀O₁₇:Eu, LaPO₄:Ce, Tb et Y₂O₃:Eu.

5. Lampe à décharge au gaz selon la revendication 1,
**caractérisée en ce**
**que** le premier revêtement fluorescent contient un pigment de pérylène et un polymère organique.

6. Lampe à décharge au gaz selon la revendication 1,
**caractérisée en ce**
**que** le premier revêtement fluorescent contient du diimide d'acide N,N'-bis(2,6-diisopropylphényl)pérylène-3,4,9,10-tétracarboxylique.

7. Lampe à décharge au gaz selon la revendication 1,
**caractérisée en ce**
**que** le premier revêtement fluorescent contient deux pigments de pérylène.
